# EUROPEAN PATENT APPLICATION

(11) **EP 2 143 695 A1**
(43) Date of publication of application: **13.01.2010**
(21) Application number: 08425469.7
(22) Date of filing: 08.07.2008
(51) Int. Cl.: C04B 33/04, C04B 33/132

(54) **Tile production method, intermediate product and tile**

(71) Applicant: IRSAI S.r.l., I-46020 CARBONARA DI PO (MN) (IT)
(72) Inventor: Moedinger, Fritz, 39042 Bressanone, Bolzano (IT); Ast, Felix Silvester, 39042 Bressanone, Bolzano (IT); Lenaz, Mauro, 25128 Brescia (IT); Morelli, Paolo, 46020 Torricella di Motteggiana, Mantova (IT)
(74) Representative: Pulieri, Gianluca Antonio

(57) **Abstract**

The present invention relates to a method for the production of tiles comprising the steps of providing at least one clayey material or mixture of clayey materials, and providing at least one density reducing agent, having a lower density than the material or mixture of materials and comprising reject or recycled material deriving from the same or from at least one different industrial process.
The method further comprises a step of mixing the clayey material and the reducing agent for obtaining an intermediate plastic mass.
The invention also relates to a method for the production of an intermediate product.
Also provided are a tile and a plant for performing the method for the production of tiles.

## Description

The present invention relates to a method for the production of tiles.

In state-of-the-art tile production processes, it is known of to add specific additives to an initial mixture of clayey materials, suitable for generating desired features in the end product.

For example, the addition of such additives to the clayey material contributes to improving mechanical or freezing resistance, insulation properties, waterproofness and/or the blooming occurrence in the tiles during use or processing.

However, the known state-of-the-art methods have a plurality of drawbacks.

In particular, the known additives comprise raw materials expressly produced for use in this type of manufacturing.

Solely as an example, it is known to use polystyrene foam (commercially known by the name Poroton®) or pearlite (commercially known by the name Perlater®), in order to improve the thermal insulation of the tiles.

However, it is possible to observe how in recent times, for economic and environmental reasons, the awareness of industry towards the use of reject or recycled raw materials deriving from production processes, that is to say towards the use of so-called "secondary raw materials" has increased.

The present invention therefore sets out to resolve the state-of-the-art drawbacks and, especially, the mentioned drawbacks.

The object of the present invention will now be described in detail with the help of the attached figures wherein:

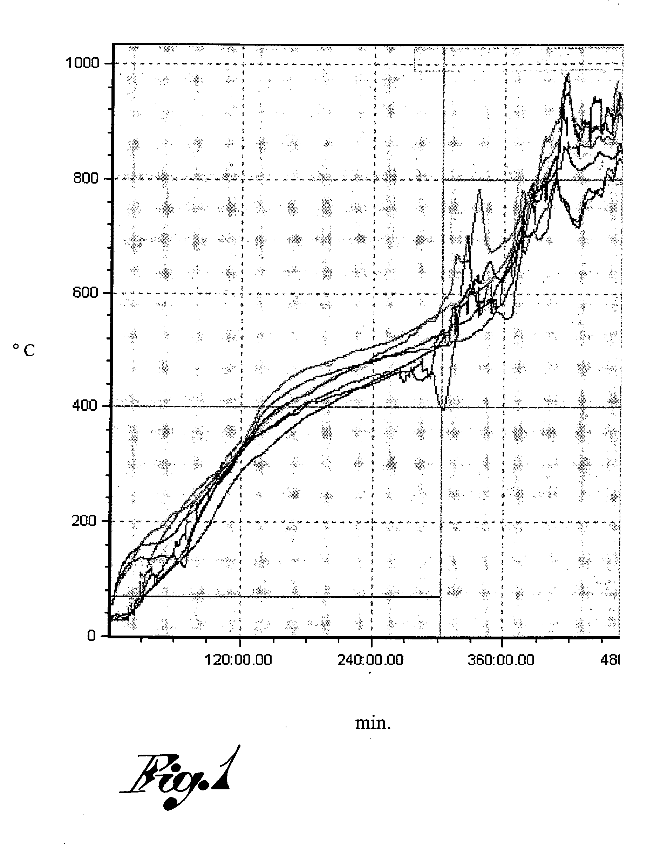

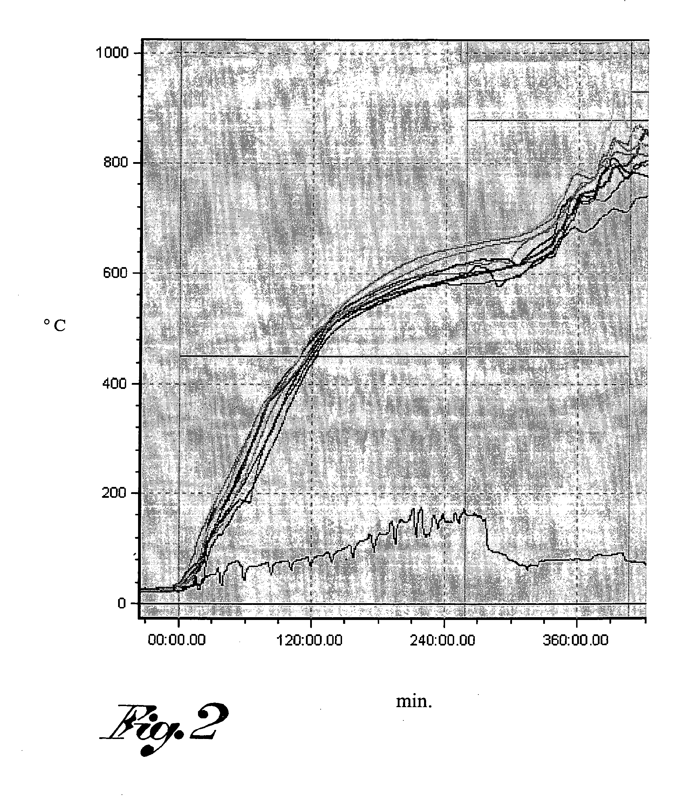

- figures 1 and 2 show the baking curves of a tile without reducing agents and of a tile comprising reducing agents, respectively. In these figures the X-axis (°C) shows the baking temperature in centigrade degrees, and the ordinate (min.) the baking time in minutes.

The objective of overcoming the drawbacks of the known technique is achieved by means of a method for the production of tiles comprising a first step of supplying at least one clayey material or mixture of clayey materials, and of supplying at least one density reducing agent, with a lower density than the clayey material or mixture of clayey materials and comprising reject or recycled matter deriving from the same or from at least one different industrial process.

Examples of reject or recycled matter which can be used in the various embodiments of the present invention are shown, in some cases together with the origin sector, in the table below:

| Product/sector of origin | Type of secondary raw material |
|---|---|
| Unbaked production rejects | Offcuts |
| Baked production rejects | Tiles |
| Earth from cuts, drilling mud, roadworks residues | Earth and mud eventually containing organic impurities |
| Residues from gas treatment | Additive to the mixture, such as chalk, in small percentages |
| Sands and silts | Additive to the mixture in small percentages |
| Electric or thermal energy generation or sludge incineration from wastewater purification | Fly Ash, Coke Breeze & Coal |
| | Heavy Ashes |
| Glass | Glass |
| Insulation, sound absorption, heat and corrosion resistant materials | Fibreglass, insulating wools, refractory fibres, special fibres |
| Production of drinking water and purification of industrial and civil wastewaters | Sludges, where necessary filterpressed |
| Paper industry | Sludges and ashes |
| Whiteware | Frits, enamels, clays, baked products |
| Recycling, treatment and processing of metals | Oxides, galvanic sludges, chrome plating, lubricant and oil sludges, slag, paints, sands |
| Agri-foodstuffs, foodstuffs, various biomass | Sugars, starches, oils, alcohols, yeasts, flours for foodstuffs, seed or olive pressing residues, etc. |
| Wood | Sawdust |
| Packaging materials | Paper, polystyrene |
| Textile, leather manufacturing | Sludges |
| Refinery | Earth, filtering materials, petrolcoke |

In a subsequent step of the method, the clayey material and reducing agent are mixed to obtain an intermediate plastic mass. Such plastic mass has a lower density than that of the clayey material or of the mixture of clayey materials, from which it is made of.

In other words, by mixing at least one clayey material having a first density, and at least one reducing agent, having a second density lower than the first, a plastic mass is obtained having a third density, comprised between the first and the second density.

In still other words, after the mixing step, the intermediate plastic mass proves "lightened" in density by the presence of the reducing agent, compared to the density of the pure clayey material.

. In other words again, after the mixing step of the clayey material with the reducing agent, the latter is dispersed, preferably homogeneously, within a matrix made of the clayey material.

Preferably, the reducing agent is in a finely dispersed form, i.e. has a reduced granulometry, in order to increase its homogeneity and distribution in the matrix.

This density value of the intermediate plastic mass must be considered prior to the forming, drying and/or baking steps, which will be discussed later, as these treatments are accompanied by a density variation of the intermediate plastic mass.

The intermediate plastic mass, usually containing a significant water percentage, is of a suitable plasticity for allowing its forming, for example, by extrusion, into a wet semi-finished product.

According to one embodiment, the method further comprises a step of measuring the plasticity of the intermediate plastic mass, for example using a Pfefferkorn plasticity meter, to verify the appropriate workability for the subsequent forming step.

This way, advantageously, the forming of the intermediate plastic mass entails less effort than that needed to form a solely clayey material, without adding a reducing agent.

. In other words, the addition of reducing agents before forming, helps to increase the plasticity coefficient of the plastic mass, so that less extrusion energy is required.

Without necessarily wishing to provide a scientific explanation of the phenomenon, the reduction of the plasticity coefficient is caused by an electrochemical effect, potentially encouraged or induced by a pH variation, which influences the composition of the mainly watery gel present between the clay particles, thus reducing the attraction between the layers of clayey material.

Moreover, advantageously, the variation in the pH of the mainly watery gel encourages its evaporation during the drying step of the wet semi-finished product. Such subsequent steps and such semi-finished product will be described in detail below.

Preferably, the step of providing the reducing agent comprises the steps of providing at least one mainly organic residue, comprising components having a biological or microbiological activity, and at least one additive, suitable for interacting with the mentioned components in order to reduce at least partially this biological or microbiological activity. In a subsequent step of this embodiment, the residue and the additive are mixed in order to reduce the biological or microbiological activity.

In fact, the greatest limit in the use of organic residues, such as sludges coming from the paper production cycle or from industrial or urban water purification treatments, is the formation of odours, often pungent and unpleasant, deriving from the products, such as mercaptans or thiols (R-SH), of organic decomposition by bacteria.

These odours, if already present in the preliminary storage step of the raw materials, are then transmitted to all the subsequent production steps of the tiles, making the process socially unsustainable.

Furthermore, some compounds of the R-SH family, such as hydrogen sulphide (H₂S), are harmful to man given that they cause damage to the central nervous system.

According to a preferred embodiment of the present invention, the biological or microbiological activity is moderated, and the residue consequently de-odorised, by the addition of ammonia and/or of an amine, preferably quaternary.

In fact, ammonia is extremely injurious to living cells, given that it triggers chemical reactions which, in the end, lead to metabolic dysfunctions in the organisms responsible for decomposition.

Advantageously, furthermore, it is possible to produce a modification of the pH value of the mixture encouraging, as mentioned previously, the evaporation of the mainly watery gel present between the clay particles, during the drying step of the wet semi-finished product.

Preferably, a quaternary ammonium salt or mixture of salts with the following general formula (I) is added to the mainly organic residue:

[R₁N(R₂)₂R₃]⁺X⁻ (I)

wherein:
- R₁ is a linear or branched alkyl radical from C₈ to C₁₈;
- R₂ is an alkyl radical from C₁ to C₃;
- R₃ is a phenyl radical C₆H₅, benzyl radical CH₂C₆H₅ or a derivate thereof, preferably mono- or di-substituted;
- X is an anion, such as, for example F, Cl, Br, I.

Even more preferably, R₁ is a linear alkyl radical from C₁₁ to C₁₅, and the anion is chlorine.

According to a preferred embodiment, the step of adding the ammonia and/or amine is followed by a neutralisation step, suitable for eliminating at least partially the ammonia and/or amine not reacted in the previous step.

In other words, during the neutralisation step, an acid compound is added, such as an inorganic acid like H₂SO₄ or H₃PO₄, suitable for removing the portion of ammonia and/or amine exceeding that required to moderate the biological or microbiological activity of the residue.

In such case, the reactions which take place may be schematized as follows:

2 NH₃ + H₂SO₄ → (NH₄)₂SO₄

3 NH₃ + H₃PO₄ → (NH₄)₃PO₄

According to a further preferred embodiment, the mainly organic residue is mixed with a terpene, having the following general formula (II):

(C₅H₈)ₙ (II)

wherein n is an integer between 5 and 20 and, preferably, between 8 and 18.

According to one embodiment, the terpene used is an essential oil, for example D-limonene obtained by pressing and/or distilling lemons.

Preferably, the mixing step of the residue and the additive comprises a step of removing the sulphurised compounds, for example the mercaptans (R-SH) or hydrogen sulphide (H₂S).

According to a preferred embodiment, the removal of the mercaptans takes place through a treatment with a base, such as for example a metal hydroxide, ammonia and/or an amine.

In these cases, the reactions which take place may be schematized as follows:

NH₃ + H₂S → NH₄HS

R-NH₂ + H₂S → [R-NH₄]⁺HS⁻

H₂S + NaOH → NaHS + H₂O

R-SH+ NaOH → RS⁻Na⁺ + H₂O

According to further embodiment, the thiolates (RS⁻Na⁺) are oxidised, for example with hydrogen peroxide, according to the following reaction:

2 RS⁻Na⁺ → RS-SR + 2 Na

According to yet a further embodiment, the thiolates (RS⁻Na⁺) are oxidised with strong oxidants such as nitric acid or permanganate, to produce sulphonates ([R-S (=O)₂-O]⁻).

According to an advantageous variation, the step of providing the reducing agent comprises the step of providing at least one metallic reducing agent.

Preferably, the metallic reducing agent has thermal conductivity greater than the clayey material or mixture of clayey materials.

. Even more preferably, the metallic reducing agents comprise alumina (Al₂O₃), for example in the form of salt slag coming from the production of secondary metallic aluminium.

The presence of metallic particles dispersed in the ceramic matrix has significant advantages during the baking step, as will be more clearly shown below.

The mentioned technical problem is also resolved through an intermediate plastic mass in a process for the production of tiles, obtainable using the method according to one of the embodiments shown above.

This intermediate plastic mass in a process for the production of tiles comprises at least one clayey material or mixture of clayey materials, and at least one density reducing agent, having a lower density than the clayey material or mixture of clayey materials and comprising reject or recycled matter deriving from the same or from at least one other industrial process.

According to a preferred variation, the volume percentage of the reducing agent in relation to the clayey material is between 10% and 50% and, even more preferably, between 20% and 30%.

According to one embodiment, the volume percentage of the reducing agent in relation to the clayey material is between 17% and 22%.

According to a further embodiment, the volume percentage of the reducing agent in relation to the clayey material is between 23% and 27%.

According to a still further embodiment, the volume percentage of the reducing agent in relation to the clayey material is between 27% and 32%.

Preferably, the intermediate plastic mass further comprises at least one mainly organic residue comprising components having a biological or microbiological activity, for example an urban or industrial sludge.

Preferably, the intermediate plastic mass further comprises at least one additive, suitable for interacting with said components in order to reduce at least partially the biological or microbiological activity.

According to an advantageous embodiment, the additive is chosen from the group comprising ammonia and/or at least one amine.

Preferably, the additive comprises an ammonium salt with the following general formula (I):

[R₁N(R₂)₂R₃]⁺X⁻ (I)

wherein:
- R₁ is a linear or branched alkyl radical from C₈ to C₁₈;
- R₂ is an alkyl radical from C₁ to C₃;
- R₃ is a phenyl radical C₆H₅, benzyl radical CH₂C₆H₅ or a derivate thereof, preferably mono- or di-substituted;
- X is an anion, such as, for example F, Cl, Br, I.

Even more preferably, R₁ is a linear alkyl radical from C₁₁ to C₁₅, and the anion is chlorine.

According to a preferred embodiment, the additive is a terpene, of general formula (II) as follows:

(C₅H₈)ₙ (II)

wherein n is an integer between 5 and 20 and, preferably, between 8 and 18.

Preferably, the intermediate plastic mass further comprises at least one metallic reducing agent, for example alumina (Al₂O₃).

According to a preferred embodiment, the method further comprises a forming step of the intermediate plastic mass into a wet semi-finished product, a drying step of the wet semi-finished product to obtain a dried semi-finished product, and lastly a baking step of the dried semi-finished product to produce a tile with sufficient mechanical resistance for its use.

As already mentioned above, the purpose of the forming step is to give the intermediate plastic mass its shape, essentially linked to the intended use of the finished tile.

For example, forming may take place by means of extrusion of the intermediate plastic mass through a die plate to obtain solid or perforated tiles.

According to a further embodiment, between the forming step and drying step also a cutting step is foreseen, for example with at least a steel wire, to obtain a wet semi-finished product of the desired size.

The drying of the wet semi-finished product enables it to lose its residual humidity, its plasticity, thus fixing its final shape and the coherence of the dried semi-finished product.

The semi-finished product is considered dried, i.e. dry, if its weight does not vary substantially after a permanence at lower temperatures than those of ceramic transformation for a given time.

For example, the temperature at which the weight variation of the semi-finished product is verified is 75°C, and the mentioned given time is of 2 hours.

During the baking step the process of ceramic transformation takes place, i.e. the dried semi-finished product is thermally transformed in order to obtain the finished tile with the mechanical features required during its use.

Preferably, the density of such finished tile is lower than the density of a tile without density reducing agents.

According to one embodiment variation, the baking step comprises a step of elimination of the residual water from the wet semi-finished product.

Preferably, the baking step comprises a step of at least partial combustion of the reducing agent contained in the dried semi-finished product.

. Even more preferably, the baking step comprises a combustion step of the mixed mainly organic residue and/or of the additive, like previously described.

In other words, the reducing agents which have remained substantially unaltered/inert during the previous steps of the process, react at least partially during the baking step with the formation of new compounds, mainly gaseous, which produce cavities, pores or micro pores in the finished tile.

Preferably, such cavities, pores or micro-pores are separated, i.e. do not communicate with each other.

The presence of pores and/or micro-pores in the tile improves its heat and noise insulation properties as, presumably, stagnant air remains trapped inside them, thus obstructing heat transmission mechanisms.

Preferably, the reducing agent is in a finely dispersed form, i.e. has a reduced granulometry, as the mechanical resistance of the tile is less jeopardised by the presence of pores of a small size (micro-pores).

Advantageously, the presence of at least one reducing agent in the dried semi-finished product during the baking step enables the combustion reaction to stoke itself at least partially.

Preferably, the baking step comprises a step of homogenisation of the heat inside the dried semi-finished product and/or the tile.

Even more preferably, the heat homogenisation step is performed using a metallic reducing agent, such as alumina.

In other words, during the baking step, the metallic reducing agent does not burn like the organic components previously described, but rather acts as a thermal energy accumulator, which improves the heat distribution inside the tile.

. In still other words, since the matrix of clayey material is unable to efficiently conduct/distribute the heat inside the tile, the presence of the metallic reducing agent improves the average heat capacity of the tile.

In practice, during the process, being the tiles usually baked after being densely arranged on a baking cart, an efficient heat distribution within the pile prevents the formation of heat gradients between its top and base.

In fact, an even heat distribution in the tile and in the pile prevents the creation of over-heated areas, so-called "black hearts", where local phenomena of pyrolysis occur, caused by the localised combustion of the organic components. The presence of black hearts leads to defective, low performance tiles.

In this context, reference is made to figures 1 and 2, showing the baking curves for two types of tile, the first (figure 1) without reducing agents, the second (figure 2) comprising reducing agents. As can be seen from a comparison of these two figures, the starting temperature of the tiles without reducing agents shows a less linear temperature trend, and a slower heat slope than those comprising reducing agents.

Furthermore, if in these figures a set time is considered, for example 120 minutes, when comparing the two curves it can be noted that the temperature of the tiles comprising the reducing agents is about 100°C higher. This means, that for the same time spent in the furnace, the tiles comprising the reducing agents undergo a longer ceramic transformation time, thus offering better mechanical properties.

In still other words, in theory, by achieving a higher temperature in a shorter time, it would be possible to build smaller furnaces.

Even more preferably, the combustion step and the homogenisation step occur simultaneously.

In the embodiment foreseeing both the combustion step and the homogenisation step, i.e. the presence of both a mainly organic residue and a metallic reducing agent, these two effects combine to improve both the thermal yield of combustion in the furnace, and the heat distribution.

In other words, in this case, the micro-combustion of the mainly organic residue stokes the micro-accumulator of thermal energy with a cumulative effect.

According to a preferred embodiment, the baking step comprises a formation step of a low temperature eutectic mixture having a ceramic transformation temperature lower than the original clayey material or mixture of clayey materials.

This way it is, for example, possible to reduce the baking temperature and/or the primary energy consumption required by the furnace.

The present invention further relates to a plant for the realisation of a method according to any of the previously embodiments shown.

By way of a non-limiting instance, some examples of the method of the present invention are given below.

In all the following examples, the clayey material used is an alpine marl.

EXAMPLE 1

Suitability of the reducing agent coming from waste water purification.

To establish the suitability of the reducing agent three tests were carried out: a first blank test on an intermediate plastic mass with no reducing agents added, a second test with the addition of reducing agents, coming specifically from waste water purification, and a third reference test, of a production cycle according to the state of the art.

The results for the baked products are shown in the following table:

| | | Reference sample | Sample with reducing agents | Blank sample |
|---|---|---|---|---|
| Aluminium oxide | % of dry substance | 15.56 | 12.90 | 12.20 |
| Sulphuric anhydride | | 0.65 | 0.60 | 44.70 |
| Antimony oxide | mg/kg of dry substance | 1.00 | 2.90 | 1.00 |
| Barium oxide | | 619.00 | 500.00 | 500.00 |
| Boron oxide | | 160.00 | 68.00 | 71.00 |
| Calcium oxide | | 11.97 | 10.90 | 11.00 |
| Iron oxide (III) | | 6.63 | 5.30 | 5.50 |
| Phosphorus pentoxide | | 0.39 | 0.51 | 0.28 |
| Magnesium oxide | | 3.92 | 2.90 | 3.70 |
| Manganese oxide | | 0.11 | 0.09 | 0.10 |
| Lead oxide | mg/kg of dry substance | 153.10 | 41.00 | 39.00 |
| Potassium oxide | % of dry substance | 2.99 | 2.50 | 2.90 |
| Silica | | 46.46 | 45.70 | 44.70 |
| Sodium oxide | | 1.25 | 0.70 | 0.90 |
| Titanium oxide | mg/kg of dry substance | 8,346.00 | 7,200.00 | 7,600.00 |
| Zinc oxide | | 234.40 | 245.00 | 140.00 |
| Zirconium oxide | | 325.10 | 240.00 | 240.00 |
| Chlorides | | 47.40 | 50.00 | 50.00 |
| Arsenic | | 23.50 | 17.00 | 15.00 |
| Cadmium | | 0.85 | 1.00 | 2.00 |
| Total chrome | | 144.20 | 140.00 | 115.00 |
| Mercury | | 1.15 | 1.00 | 1.00 |
| Nickel | | 78.40 | 74.00 | 67.00 |
| Copper | | 46.20 | 57.00 | 40.00 |
| Selenium | | 1.57 | 2.00 | 2.00 |

As can be seen from the previous table the presence of the reducing agent inside the intermediate plastic mass does not significantly influence the composition neither in relation to the reference sample, nor in relation to the blank sample.

EXAMPLE 2

Deviation from the average annual composition

In the production cycle of the reference sample of example 1, samplings and analysis of the raw materials and of the products at the various manufacturing steps was carried out.

Two tests were therefore compared: the first test related to the composition values of the reference sample, averaged over one year, and the second test related to an intermediate plastic mass with approx. 10% of fibreglass added to it.

| | | Reference sample (annual average 2001) | Sample with reducing agents |
|---|---|---|---|
| Aluminium oxide | % of dry substance | 17.07 | 18.59 |
| Sulphuric anhydride | | 0.40 | 0.35 |
| Antimony oxide | mg/kg of dry substance | 1.29 | 1.00 |
| Barium oxide | | 665.92 | 660.00 |
| Boron oxide | % of dry substance | 145.20 | n.a. |
| Calcium oxide | | 7.51 | 8.90 |
| Iron oxide | | 7.13 | 6.89 |
| Phosphorus oxide | | 0.43 | 0.55 |
| Magnesium oxide | | 3.14 | 3.56 |
| Manganese oxide | | 0.11 | 0.11 |
| Lead oxide | mg/kg of dry substance | 159.42 | 250.00 |
| Potassium oxide | % of dry substance | 3.02 | 3.53 |
| Silica oxide | | 46.06 | 53.12 |
| Sodium oxide | | 0.94 | 0.77 |
| Titanium oxide | mg/kg of dry substance | 9,715.38 | 7,900.00 |
| Zinc oxide | | 351.15 | 300.00 |
| Zirconium oxide | | 313.33 | 370.00 |
| Chlorides | | 63.00 | 10.00 |
| Arsenic | | 25.22 | 30.00 |
| Cadmium | | 0.75 | 0.50 |
| Total chrome | | 174.92 | 130.00 |
| Mercury | | 1.67 | 2.00 |
| Nickel | | 83.33 | 68.00 |
| Copper | | 42.75 | 52.00 |
| Arsenic | | 0.94 | 0.50 |

As can be seen from a comparison of the composition values of the two samples, the use of fibreglass does not cause a variation in the results analysed exceeding the statistical average.

Furthermore, no value of the sample comprising the reducing agent exceeds the minimum and maximum values found throughout the reference year.

EXAMPLE 3

Behaviour in relation to the emission of pollutants

In this test it was seen how the use of fibreglass reduces the emission of pollutants in the transfer tests, especially of chrome.

Three tests were compared, the first related to the composition values of the reference sample of example 2, and the second and third tests related to two intermediate plastic masses with 6% and 8% of fibreglass added to them, respectively.

The fourth column shows the legal limit for each component.

| | | Sample 6% | Sample 8% | Ref. sample. | Limit value |
|---|---|---|---|---|---|
| Fluorides | mg/l | 1.50 | 1.10 | 1.97 | 1.50 |
| Chlorides | | 2.00 | 3.00 | 2.50 | 200.00 |
| Nitrates | | 1.00 | 1.00 | 1.00 | 50.00 |
| Sulphates | | 160.00 | 57.00 | 156.17 | 250.00 |
| Arsenic | µg/l | 44.00 | 14.00 | 35.50 | 50.00 |
| Barium | | 13.00 | 8.00 | 11.50 | 1.000.00 |
| Beryllium | | 1.00 | 1.00 | 1.00 | 10.00 |
| Cadmium | | 1.00 | 1.00 | 1.00 | 5.00 |
| Cobalt | | 1.00 | 1.00 | 1.00 | 250.00 |
| Total chrome | | 36.00 | 34.00 | 348.33 | 50.00 |
| Mercury | | 0.10 | 0.10 | 0.10 | 1.00 |
| Nickel | | 2.00 | 2.00 | 1.50 | 10.00 |
| Lead | | 1.00 | 1.00 | 1.67 | 50.00 |
| Copper | | 1.00 | 1.00 | 3.17 | 50.00 |
| Selenium | | 3.00 | 3.00 | 3.83 | 10.00 |
| Vanadium | | 190.00 | 34.00 | 90.67 | 250.00 |
| Zink | | 1.00 | 2.00 | 6.17 | 3.000,00 |

A reduction of pollutants may be observed, which is especially marked both as regards chrome and fluoride emissions.

EXAMPLE 4

Test of tiles resistance to compression

Tests were carried out on the resistance to compression of two tile formats without fibreglass and with various percentages of fibreglass.

| | Resistance to compression in N/mm² |
|---|---|
| Format B38 baked at 820°C | 6.5 |
| Format B38 baked at 820°C with 8% volume of fibreglass | 9 |
| Format B38 baked at 960°C with 8-10% volume of fibreglass | 15 |
| Format "Amort" baked at 820°C | 12 |
| Format "Amort" baked at 820°C with 8-10% volume of fibreglass | 18 |
| Format "Amort" baked at 960°C with 12% volume of fibreglass | 24 |

An increase in resistance to compression may be observed for both types of tile, proportional to the increase in the percentage of fibreglass used.

EXAMPLE 5

Tests of tensile strength upon bending of fillet

| | Tensile strength in N/mm² |
|---|---|
| Baked at 950°C without fibreglass | 7 |
| Baked at 950°C with 5% in volume of fibreglass | 7.1 |
| Baked at 850°C without fibreglass | 6.7 |
| Baked at 850°C with 5% in volume of fibreglass | 7.4 |

As may be observed from the table values, there is an increase in average tensile strength thanks to the mixing of fibreglass with the intermediate plastic mass.

EXAMPLE 6

Tests of freezing resistance

These tests were conducted in conformity with legislation DIN 52 252, but using boiling water to unfreeze.

In other words, unfreezing occurred in more violent conditions than those foreseen by the mentioned standard.

| | Density in kg/l | Number of cycles after which cracks were found in the tile |
|---|---|---|
| Reference sample (annual average year 2000) | 1.75 | 32 |
| Sample 1 | 1.67 | 17 |
| Sample 2 | 1.58 | 15 |
| Sample 3 | 1.62 | 11 |
| Sample 4 | 1.59 | 2 |

As may be seen from the experimental results, the reduction in density of the tile was accompanied by an almost linear reduction in freezing resistance.

In fact, the presence of pores in the tile enables it to absorb water better, so that a tile comprising a density reducing agent of an organic type suffers more from the effects of thermal expansion of water.

EXAMPLE 7

Shrinkage test of the intermediate plastic mass

Shrinkage tests of the plastic mass were conducted for two tile formats with the reducing agent in example 1 and with varying fibreglass percentages.

| | Volume percentage |
|---|---|
| Reference sample (average year 2001) | 5.5 |
| Shrinkage of standard mixture | 5.0 |
| Shrinkage of standard mixture with reducing agents with fibreglass | 4.1 |
| Format B38 baked at 820°C with 8% volume of fibreglass | 3.5 |
| Format B38 baked at 960°C with 8% - 10% volume of fibreglass | 3.2 |
| Format "Amort" baked at 960°C with 12% volume of fibreglass | 3 |

As may be observed the fibreglass reduces shrinkage of the plastic mass. The extent of such shrinkage increases in an essentially linear proportion with the increase in percentage of fibre.

EXAMPLE 8

The effect of the reducing agent coming from a production cycle making paper from virgin cellulose

| | | Untreated sludge | Treated sludge |
|---|---|---|---|
| Humidity | % of dry substance | 60.00 | 58.00 |
| Dry substance at 105°C | | 40.00 | 42.00 |
| Non-combusted substance at 600°C | | 30.00 | 28.00 |
| Aluminium oxide | % of dry substance | 6.30 | 5.60 |
| Sulphuric anhydride | | 0.10 | 0.20 |
| Antimony oxide | mg/kg of dry substance | 1.20 | 1.20 |
| Barium oxide | | 1.10 | 40.00 |
| Boron oxide | % of dry substance | 210.00 | 69.00 |
| Calcium oxide | | 31.10 | 33.50 |
| Iron oxide | | 0.20 | 0.20 |
| Phosphorus oxide | | 0.20 | 0.18 |
| Magnesium oxide | | 0.01 | 0.70 |
| Manganese oxide | | 0.18 | 0.01 |
| Lead oxide | mg/kg of dry substance | 5.70 | 7.00 |
| Potassium oxide | % of dry substance | 0.30 | 0.30 |
| Silica oxide | | 2.80 | 2.70 |
| Sodium oxide | | 0.50 | 0.40 |
| Titanium oxide | mg/kg of dry | 240.00 | 190.00 |
| Zinc oxide | | 21.00 | 18.00 |
| Zirconium oxide | | 170.00 | 160.00 |
| Chlorides | | 140.00 | 150.00 |
| Arsenic | | 1.00 | 1.00 |
| Cadmium | | 1.70 | 1.00 |
| Total chrome | | 10.00 | 10.00 |
| Mercury | | 2.00 | 2.00 |
| Nickel | | 10.00 | 10.00 |
| Copper | | 13.00 | 14.00 |
| Arsenic | | 0.50 | 0.50 |

As estimated, the addition of a sludge made from virgin cellulose to the intermediate plastic mass resulted in a variation of the percentage composition of such mass.

Specifically, the significant increase in the percentages of magnesium and barium oxide may be noted. Such oxides are low-melting and thus enable to lower the furnace temperature during the baking step.

EXAMPLE 9

Tests of tensile strength upon bending of fillet

Tests were conducted on samples comprising the two types of sludge in example 9.

| | Tensile strength in N/mm² |
|---|---|
| Blank | 10.6 |
| Untreated sludge | 8.6 |
| Treated sludge | 8.7 |

As may be observed from the preceding table, the tensile strength of the tile proves lower than for the blank. This is due to the formation, during the baking step, of the cavities and/or (micro-) pores as a result of the mainly organic residues and/or of the additives used.

In fact, as mentioned above, the formation of such cavities increases the thermal insulation properties of the tile, but reduces its mechanical strength.

Innovatively, the method of the present invention allows to use reject or recycled raw materials deriving from the same or from different manufacturing processes, making the process advantageous both from an economic and environmental point of view.

Advantageously, the method of the present invention allows to reduce the average density of the intermediate plastic mass, further influencing its plasticity, with a significant saving of both the energy needed to form the tile and the primary energy needed for its baking.

Advantageously, the method of the present invention allows to use sludges traditionally unusable inasmuch as foul-smelling, pungent or even unhealthy. It is, in fact, suitable for reducing the biological/bacteriological activity of these sludges, making the process socially sustainable both for the workers involved in the process, and for the people inhabiting the areas neighbouring the relative plant.

Advantageously, the additives suitable for interacting with said components having a (micro-)biological activity are mainly organic, so that their removal from the tile occurs automatically during the baking step.

Advantageously, using a base, for example ammonia or an amine, it is further possible to produce a pH variation of the watery gel present between the clay particles, encouraging their evaporation during the drying step of the wet semi-finished product.

Advantageously, the method of the present invention is highly versatile, in that it permits the use of both mainly organic residues, deriving for example from water purification processes, and metallic reducing agents, deriving for example from the production of secondary aluminium.

Advantageously, the presence of a secondary raw material, regardless of its nature, preferably finely dispersed within the clayey material makes it possible to achieve excellent results, especially during the baking step.

Advantageously, the presence of a combustible, for example of a sludge, inside the clayey material enables the baking step to stoke itself at least partially, so that it enables energy-saving for the furnace functioning.

Advantageously, the presence of a metallic reducing agent, such as aluminium oxide, makes it possible to homogenise the heat inside the clayey matrix to improve its internal conductivity, given that such reducing agent acts as a micro-accumulator of thermal energy.

Advantageously, an even distribution of the heat prevents the formation of black hearts, improving the quality of the tiles, irrespective of their arrangement during the baking step.

Advantageously, the contemporary presence of the combustible and of the metallic reducing agent confers a cumulative result of the relative effects, improving for example the mechanical properties and thermal insulation of the tile.

Advantageously, the formation of cavities, pores or micro-pores, preferably not reciprocally communicating, in the tile confers to the article a particularly high performance in respect of thermal and acoustic insulation.

Advantageously, the formation of a low temperature eutectic during the baking step allows to reduce the temperature of this step and/or the consumption of primary energy required by the furnace.

Advantageously, the fact of reaching a higher temperature in a shorter time permits a shorter baking cycle of the tile and therefore the prospective building of smaller furnaces.

A person skilled in the art may make modifications to the embodiments of the production method, of the intermediate product and of the tile described above in order to satisfy contingent requirements while remaining within the sphere of protection of the following claims.

Each of the features described as belonging to a possible embodiment is protected independently from the other embodiments described.

## Claims

1. Method for the production of tiles comprising the steps of:
- providing at least one clayey material or mixture of clayey materials;
- providing at least one density reducing agent, having a lower density than said material or said mixture of materials and comprising reject or recycled matter deriving from the same or from at least one different industrial process;
- mixing the clayey material and the reducing agent for obtaining an intermediate plastic mass.

2. Method according to claim 1, wherein the step of providing the reducing agent comprises the steps of:
a) providing at least one mainly organic residue comprising components having biological or microbiological activity, such as urban or industrial sludge;
b) providing at least one additive, suitable for interacting with said components in order to reduce at least partially their biological or microbiological activity;
c) mixing the residue and the additive in order to reduce the biological or microbiological activity.

3. Method according to claim 2, wherein the step of mixing the residue and the additive comprises a step of removing the sulphurised compounds, such as mercaptans (R-SH) or hydrogen sulphide (H₂S).

4. Method according to any of the previous claims, wherein the step of providing the reducing agent comprises the step of providing at least one metallic reducing agent, such as alumina (Al₂O₃).

5. Method according to any of the previous claims, further comprising the steps of:
i) forming the intermediate plastic mass into a wet semi-finished product ;
ii) drying the wet semi-finished product to obtain a dried semi-finished product;
iii) baking the dried semi-finished product to obtain a tile having mechanical resistance at least sufficient for use.

6. Method according to claim 5, wherein the baking step further comprises a step of forming cavities, pores and/or micro-pores in the dried semi-finished product and/or in the tile.

7. Method according to claim 5 or 6, wherein the baking step further comprises a step of forming a low temperature eutectic in order to reduce the consumption of primary energy required for the realisation of this step.

8. Intermediate plastic mass in a process for the production of tiles obtainable with the method according to one of the claims from 1 to 4.

9. Intermediate plastic mass in a process for the production of tiles comprising:
- at least one clayey material or mixture of clayey materials; and
- at least one density reducing agent, with a lower density than said material or said mixture of materials and comprising reject or recycled matter deriving from the same or from at least one different industrial process.

10. Intermediate plastic mass according to claim 8 or 9, wherein the volume percentage of the reducing agent in relation to the clayey material is between 10% and 50%.

11. Intermediate plastic mass according to any of the claims from 8 to 10, wherein the volume percentage of the reducing agent in relation to the clayey material is between 20% and 30%.

12. Intermediate plastic mass according to any of the claims from 8 to 11, further comprising at least one mainly organic residue comprising components having biological or microbiological activity, for example urban or industrial sludge.

13. Intermediate plastic mass according to claim 12, further comprising at least one additive, suitable for interacting with said components in order to reduce at least partially their biological or microbiological activity.

14. Intermediate plastic mass according to claim 13, wherein the additive is chosen from the group comprising ammonia and/or at least one amine.

15. Intermediate plastic mass according to claim 13 or 14, wherein the additive comprises an ammonium salt having the following general formula (I):
[R₁N(R₂)₂R₃]⁺X⁻ (I)
wherein:
- R₁ is a linear or branched alkyl radical from C₈ to C₁₈;
- R₂ is an alkyl radical from C₁ to C₃;
- R₃ is a phenyl radical C₆H₅, benzyl radical CH₂C₆H₅ or a derivate thereof, preferably mono- or di-substituted;
- X is an anion.

16. Intermediate plastic mass according to any of the claims from 13 to 15, wherein the additive is a terpene with the following general formula (II):
(C₅H₈)ₙ (II)
wherein n is an integer between 5 and 20.

17. Intermediate plastic mass according to any of the claims from 8 to 16, further comprising at least one reducing agent of a metallic type, such as alumina (Al₂O₃).

18. Tile obtained using the method according to any of the claims from 5 to 7.

19. Plant for the realisation of a method according to any of the claims from 1 to 7.
